# EUROPÄISCHE PATENTSCHRIFT

(11) **EP 2 141 053 B1**
(45) Veröffentlichungstag und Bekanntmachung des Hinweises auf die Patenterteilung: **05.10.2011**
(21) Anmeldenummer: 09161258.0
(22) Anmeldetag: 27.05.2009
(51) Int. Cl.: B60S 9/02, B66C 23/80

(54) **Stützfuß mit zusätzlicher Führungseinrichtung**
Support foot with additional guide device
Pied de support doté d'un dispositif de guidage supplémentaire

(30) Priorität: 01.07.2008 DE 102008031066
(43) Veröffentlichungstag der Anmeldung: 06.01.2010
(73) Patentinhaber: SAF-HOLLAND GmbH, 63856 Bessenbach (DE)
(72) Erfinder: Christ, Armin, 63856 Bessenbach (DE)
(74) Vertreter: Bauer, Clemens

(56) Entgegenhaltungen:
- DE-A1- 4 003 414
- DE-A1- 19 957 244
- DE-C1- 4 014 296
- GB-A- 2 207 102

## Beschreibung

Die vorliegende Erfindung bezieht sich auf einen Stützfuß für eine Teleskop-Stützvorrichtung von Fahrzeugen, wie Sattelanhängern. Hierbei ist am unteren Ende eines ausfahrbaren Stützenteils bzw. Stützelements ein schwenkbarer Stützfuß vorgesehen, der ausgelegt ist, Bodenunebenheiten sowie einen Versatz der Position des Fahrzeugs auszugleichen.

Stützfüße zum Ausgleich eines Positionsversatzes sind hinlänglich aus dem Stand der Technik bekannt. Derartige Stützvorrichtungen sind an der vorderen Unterseite von beispielsweise Sattelanhängern paarweise angeordnet und kommen immer dann zum Einsatz, wenn der Sattelanhänger vom Sattelschlepper getrennt abgestellt wird. Bei längeren Standzeiten führen Undichtigkeiten im Brems- und Luftfedersystem dazu, dass sich der hintere Teil des Sattelaufliegers absenkt und infolge der arretierten Parkbremse und der mechanischen Achsaufhängung sich das Fahrzeug bzw. der Sattelanhänger vorwärts bewegt. Bei den üblich eingestellten Senkwegen am Luftfederaggregat kann diese Verschiebung bis zu ca. 150 mm ausmachen. In dieser Situation sind die Stützvorrichtungen bzw. deren Stützelemente und Stützrohre einer Biege- und Knickspannung ausgesetzt, die zu ihrer Beschädigung oder zum Versagen der Stützen führen können. Um diesen Positionsversatz ausgleichen zu können, wurden Stützfüße entwickelt, die schwenkbar angeordnet sind, um die Funktionalität der Stützen vollständig zu erhalten. So offenbart beispielsweise die DE 40 03 414 A1 einen Stützfuß, der ein schwenkbar gelagertes Rollsegment und eine Fußplatte aufweist, wobei das Rollsegment auf der Fußplatte abrollbar ist. Um eine Führung zwischen Rollsegment und Fußplatte bereitzustellen, ist ein durch das Rollsegment durchgeführter horizontaler Stab vorgesehen, der mit V-förmigen Schlitzen in den Seitenwänden der Fußplatte in Eingriff steht. Problematisch bei einer derartigen Fußausführung mit V-förmigen Schlitzen in den Seitenwänden ist jedoch, dass durch die Form und Größe der V-förmigen Schlitze keine senkrechte Führung der Fußplatte bzw. des Fußelements ermöglicht werden kann und daher beim Auf- und Absetzen das Fußelement in der Regel um einen Winkel verdreht ist. Weiterhin problematisch bei einer derartigen Ausführungsform ist die gewichtsintensive Gestaltung des Fußelements, da die Seitenwände des Fußelements sich in entlang der gesamten Längserstreckung desselben erstrecken müssen, um eine Führung über den gesamten Rollweg des Rollelements bereitzustellen.

Es ist somit Aufgabe der vorliegenden Erfindung, einen Stützfuß für eine Teleskop-Stützvorrichtung von Fahrzeugen, wie Sattelanhängern, vorzusehen, welcher fähig ist, eine Führung zwischen Ausgleichselement und Fußelement unter Beibehaltung eines geringen Gewichts des Fußelements zu gewährleisten.

Diese Aufgabe wird durch einen Stützfuß für eine Teleskop-Stützvorrichtung von Fahrzeugen, wie Sattelanhängern, mit den Merkmalen des Anspruchs 1 gelöst. Bevorzugte Ausführungsformen ergeben sich aus den abhängigen Ansprüchen.

Erfindungsgemäß ist ein Stützfuß für eine Teleskop-Stützvorrichtung von Fahrzeugen, wie Sattelanhängern, vorgesehen, umfassend ein Fußelement mit einem Auflagebereich zur Auflage auf einem Untergrund, ein Ausgleichselement zur Aufnahme eines Stützelements und zum Ausgleich eines Positionsversatzes desselben, indem das Ausgleichselement in Bezug auf das Fußelement zwischen einer ersten und einer zweiten Position verlagerbar ist, wobei das Ausgleichselement schwenkbar gelagert ist, und eine Führungseinrichtung mit zumindest einem Führungselement, um eine Führung zwischen Ausgleichselement und Fußelement bereitzustellen, wobei das Führungselement schwenkbar einerseits an dem Ausgleichselement und andererseits an dem Fußelement angeordnet ist. Zweckmäßigerweise ist das Stützelement an dem Ausgleichselement angeordnet. Das Stützelement ist beispielsweise als Stützrohr einer Teleskopverbindung ausgebildet und dient zur Übertragung von aus einem Rahmen eines Fahrzeugs in das Stützelement eingeleiteten Kräften auf den Stützfuß. Das Stützelement ist vorteilhafterweise dreh- bzw. schwenkbar, insbesondere entlang der Schwenkebene des Ausgleichselements, mit demselben verbunden. Die Verbindung kann hierbei derart gestaltet sein, dass das Ausgleichselement vom Stützelement lösbar ist. Mittels des Fußelements und des Ausgleichselements ist es möglich, einen Positionsversatz des Stützelements in Bezug auf das Fußelement auszugleichen bzw. zu kompensieren. Der Begriff Positionsversatz kann hierbei insbesondere in Form der Veränderung der Position in linearer Richtung (beispielsweise horizontal bzw. in Längsrichtung des Fußelements) verstanden werden. Es versteht sich, dass ebenfalls ein Winkelversatz des Stützelements in Bezug auf das Fußelement einerseits aufgrund der schwenkbaren Anordnung des Ausgleichselements mit Bezug auf das Fußelement und/oder andererseits aufgrund der dreh- bzw. schwenkbaren Anlenkung des Stützelements an dem Ausgleichselement ausgeglichen werden kann. Das Ausgleichselement und das Fußelement können in Bezug zueinander zwischen einer ersten Position und einer zweiten Position verlagert werden. Die erste Position kann insbesondere eine Ursprungsposition bzw. Nullstellung sein, in welcher das Ausgleichselement in Bezug auf das Fußelement im Wesentlichen mittig angeordnet ist. Ausgehend von der ersten Position kann das Ausgleichselement in Bezug auf das Fußelement in Richtung einer zweiten Position verlagert bzw. verschwenkt werden. Die zweite Position ist infolgedessen insbesondere eine ausgelenkte Position, wobei die Verlagerung des Ausgleichselements besonders vorteilhafterweise - ausgehend von der ersten Position - sowohl nach vorne (vordere Position) als auch nach hinten (hintere Position) erfolgen kann. Somit liegt die erste Position insbesondere zwischen der vorderen und hinteren Position. Aufgrund der Tatsache, dass das Ausgleichselement auf dem Fußelement mittels einer Abroll- und/oder Gleitbewegung schwenkbar verlagerbar ist, liegen die erste Position und die zweite Position vorzugsweise im Wesentlichen entlang einer Geraden bzw. Linie bzw. Achse bzw. auf einer Schwenkebene. Besonders zweckmäßig stehen Ausgleichselement und Fußelement während der gesamten Verlagerung zwischen erster und zweiter Position in Kontakt. Somit wird gewährleistet, dass die gesamte vertikale Kraftübertragung nicht über die Führungseinrichtung bzw. das Führungselement erfolgt, sondern vom Fußelement über das Ausgleichselement in das Stützelement. Zweckmäßigerweise weist das Fußelement einen Auflagebereich zur Auflage auf einem Untergrund auf. Dieser ist vorteilhafterweise im Wesentlichen plattenförmig ausgebildet und kann eine im Wesentlichen rechteckige Form aufweisen mit einer Längserstreckung, die größer als dessen Breitenerstreckung ist. Das Ausgleichselement ist zweckmäßigerweise schwenkbar gelagert, wobei der Begriff "schwenkbar gelagert" dahingehend zu interpretieren ist, dass das Ausgleichselement in Bezug auf das Fußelement schwenkbar verlagerbar ist. Hierfür weist das Ausgleichselement eine Schwenkachse auf, die zweckmäßigerweise im Wesentlichen mit der Lagerachse des Stützelements übereinstimmt bzw. zu dieser parallel angeordnet ist. Die Schwenkachse steht zweckmäßigerweise im Wesentlichen senkrecht zur Längserstreckung bzw. Längsachse des Fußelements, wobei die Schwenkebene im Wesentlichen parallel zur Längsachse des Fußelements bzw. im Wesentlichen rechtwinklig zur Schwenkachse des Ausgleichselements angeordnet ist. Die Führungseinrichtung ist vorgesehen, um eine Führung zwischen dem Ausgleichselement und dem Fußelement bereitzustellen. Hierbei kann die Führungseinrichtung derart ausgestaltet sein, dass das Ausgleichselement das Fußelement führt oder umgekehrt. Notwendig ist einzig, dass das Ausgleichselement in Bezug bzw. in Relation zu dem Fußelement geführt ist. Die Führung ist hierbei zweckmäßigerweise derart gestaltet, dass das Ausgleichselement in Bezug auf das Fußelement in dessen Breitenrichtung bzw. quer (insbesondere senkrecht) zur Schwenkebene geführt ist. Hierfür ist vorteilhafterweise ein Führungselement vorgesehen, welches schwenkbar bzw. drehbar bzw. kippbar einerseits an dem Ausgleichselement und andererseits an dem Fußelement angeordnet ist. Die Anordnung kann hierbei unmittelbar oder mittelbar, beispielsweise über zwischengeschaltete Elemente, erfolgen. Insbesondere kann das Führungselement nicht direkt mit dem Ausgleichselement drehbar verbunden sein, sondern beispielsweise mit dessen Schwenkachse oder der Schwenkachse des Stützelements oder direkt am Stützelement. Durch die Führungseinrichtung wird somit eine verbesserte Funktionalität und verbesserte Führungseigenschaften gewährleistet, wodurch ermöglicht wird, dass das Fußelement beim Anheben und Absenken des Stützfußes eine genaue Positionierung bei gleichzeitiger Führung des Ausgleichselements erfährt. Darüber hinaus ist es im Gegensatz zum Stand der Technik nicht mehr notwendig, am Fußelement sich über dessen gesamte Länge erstreckende Seitenwände vorzusehen, sodass das Fußelement mit einem geringeren Gewicht ausgebildet werden kann. Schließlich erfüllt die Führungseinrichtung noch die Funktion einer Halteeinrichtung, die im Falle eines Versagens von einer Rückstellvorrichtung (Feder) in die erste Position die weitere Funktionsfähigkeit des Stützfußes garantiert, da sowohl das Fußelement an dem Stützfuß gehalten wird und somit nicht verloren werden kann als auch das Fußelement in die erste Position geführt wird.

Vorzugsweise ist das Führungselement in einer Ebene im Wesentlichen parallel zur Schwenkebene des Ausgleichselements schwenkbar. Die Bewegung des Führungselements erfolgt somit primär in bzw. auf einer Ebene, welche im Wesentlichen parallel zur Schwenkebene des Ausgleichselements liegt. In anderen Worten steht bzw. stehen die Schwenkachse(n) des Führungselements im Wesentlichen senkrecht zur Schwenkebene des Ausgleichselements.

Weiterhin bevorzugt ist das Führungselement als Hebelelement ausgebildet. Das Führungselement kann infolgedessen somit stab- oder stiftförmig ausgebildet sein, mit einer Längserstreckung wesentlich größer als dessen Breitenerstreckung. Besonders vorteilhaft ist der Querschnitt des Führungselements im Wesentlichen rechteckig. Das Führungselement weist zweckmäßigerweise zwei Öffnungen bzw. Durchbrüche für die schwenkbare Anordnung an dem Fußelement und dem Ausgleichselement auf. Diese können durch ein Befestigungsmittel (beispielsweise eine Schraube) durchgriffen werden.

Ferner bevorzugt ist das Führungselement an dem Ausgleichselement über einen ersten Lagerbereich und an dem Fußelement über einen zweiten Lagerbereich schwenkbar angeordnet. Das Führungselement weist somit einen ersten Lagerbereich bzw. Lagerabschnitt auf, welcher eine Drehung des Führungselements relativ zum Ausgleichselement zulässt und darüber hinaus ausgelegt ist, Kräfte zwischen Führungselement und Ausgleichselement zu übertragen. Entsprechend ermöglicht ebenfalls der zweite Lagerbereich bzw. Lagerabschnitt eine Drehung bzw. Verschwenkung des Führungselements relativ zu dem Fußelement und eine Kraftübertragung von Kräften zwischen Fußelement und Führungselement. Die Lagerbereiche können derart gestaltet sein, dass an geeigneten Stellen, beispielsweise den jeweiligen Endbereichen des Führungselements eine Öffnung bzw. ein Durchbruch vorgesehen ist, durch welchen sich ein Befestigungselement (beispielsweise eine Schraube, Bolzen oder ähnliches) erstrecken kann, welches entsprechend mit dem Ausgleichselement bzw. Fußelement in Eingriff steht.

Vorteilhafterweise ist das Führungselement über den ersten Lagerbereich weiterhin translatorisch verschiebbar an dem Ausgleichselement angeordnet. Hierdurch wird eine Verschiebung des Führungselements relativ zu dem Ausgleichselement ermöglicht, sodass der erste Lagerbereich sowohl eine rotatorische als auch eine translatorische Bewegung zwischen Führungselement und Ausgleichselement zulässt. Dies führt dazu, dass bei einer Bewegung des Ausgleichselements von der ersten in Richtung der zweiten Position sich der erste Lagerbereich zu dem distalen Ende des Führungselements hinbewegt. In anderen Worten sind der erste und zweite Lagerbereich vorteilhafterweise in der ersten Position des Stützfußes am nahesten zueinander und beabstanden sich voneinander bei einer Bewegung des Stützfußes in Richtung dessen zweiter Position.

Zweckmäßigerweise ist hierfür der erste Lagerbereich als Langloch ausgebildet. Durch Ausbildung des ersten Lagerbereichs als Langloch wird die translatorische Verschiebung des ersten Lagerbereichs vorteilhafterweise vereinfacht. Das Langloch erstreckt sich zweckmäßigerweise entlang bzw. parallel einer Geraden, auf welcher der erste und zweite Lagerbereich liegen.

In einer bevorzugten Ausführungsform sind zwei Führungselemente vorgesehen, welche an im Wesentlichen gegenüberliegenden Seiten des Ausgleichselements angeordnet sind. Zweckmäßigerweise ist somit jeweils ein Führungselement an bzw. benachbart zu einer Seitenkante bzw. Längsseite bzw. Längskante des Fußelements angeordnet, sodass sich die Führungselemente im Wesentlichen seitlich des Ausgleichselements befinden. Es können jedoch auch Führungselemente vorgesehen sein, die im Wesentlichen entlang ein und derselben Schwenkebene angeordnet sind. So könnten die Führungselemente beispielsweise in ihrem zweiten Lagerbereich in der Schwenkebene entlang der Längserstreckung des Fußelements voneinander beabstandet an diesem angeordnet sein und zueinander hinlaufend über den gleichen ersten Lagerbereich an dem Ausgleichselement schwenk- und verschiebbar angeordnet sein. Es versteht sich, dass die ersten Lagerbereiche nicht gleich sein müssen, sondern das jeweilige Führungselement über einen beabstandeten ersten Lagerbereich an dem Ausgleichselement dreh- und verschiebbar angeordnet ist.

Vorteilhafterweise fluchtet die Schwenkachse zwischen Ausgleichselement und Führungselement mit der Schwenkachse des Ausgleichselements. Es kann somit eine Lagerachse vorgesehen sein, auf welcher sowohl das Ausgleichselement als auch das Stützelement schwenkbar gelagert sind und welche mit dem ersten Lagerbereich des Führungselements in Eingriff steht bzw. diesen konstituiert.

Vorzugsweise weist die Führungseinrichtung einen Führungsbereich auf, der als sich vom Auflagebereich im Wesentlichen senkrecht erstreckender Wandbereich ausgebildet ist. Der Wandbereich kann somit als Vorsprung ausgebildet sein, der sich vom Auflagebereich weg und entlang der Längsachse des Fußelements erstreckt. Dieser kann auch parallel zur Längsachse des Fußelements und mittig an diesem angeordnet sein, sodass das Ausgleichselement jeweils einen Abrollbereich seitlich hiervon aufweist. Durch das Vorsehen einer Führungseinrichtung bei dem erfindungsgemäßen Stützfuß ist es jedoch nicht notwendig, den als Vorsprung ausgebildeten Wandbereich entlang der gesamten Längserstreckung des Fußelements auszubilden. Vielmehr erstreckt sich dieser nur über einen sehr kurzen Teil der Längserstreckung, und zwar soweit, dass ein ausreichend stabiler zweiter Lagerbereich bereitgestellt ist. Insbesondere erstreckt sich der Führungsbereich vorteilhafterweise über weniger als zwei Drittel der Längserstreckung des Fußelements, besonders vorteilhafterweise weniger als ein Drittel und am meisten vorzugsweise weniger als ein Fünftel.

Zweckmäßigerweise ist das Führungselement schwenkbar an dem Führungsbereich angeordnet. In anderen Worten ist das Führungselement besonders vorzugsweise über den zweiten Lagerbereich an dem Führungsbereich angeordnet.

Bevorzugterweise ist das Ausgleichselement auf einem Abrollbereich des Fußelements abrollbar. Infolgedessen liegen die erste Position und die zweite Position vorzugsweise im Wesentlichen entlang einer Geraden bzw. Linie bzw. Achse bzw. auf einer Schwenkebene. Der Abrollbereich ist vorzugsweise im Wesentlichen im Auflagebereich des Fußelements gegenüberliegend angeordnet. Um ein Abrollen des Ausgleichselements zu gewährleisten, weist das Ausgleichselement eine Abrollfläche auf, die entlang der Schwenkebene gekrümmt ist. Die Krümmung der Abrollfläche kann beliebig gestaltet sein. Es ist jedoch besonders vorteilhaft, wenn die Krümmung der Abrollfläche kurven- oder kreisförmig, d. h. nicht eckig, ist. Durch die Krümmung des Ausgleichselements entlang der Schwenkebene ist es somit möglich, dass das Ausgleichselement auf dem Fußelement entlang dessen Längsachse abrollen kann, sodass ein Positionsversatz des Fahrzeugs in Längsrichtung kompensiert werden kann. Die Krümmung der Abrollfläche entlang der Schwenkebene ist dahingehend zu verstehen, dass die Schnittkurve bzw. -linie der Abrollfläche mit der Schwenkebene eine entsprechende Krümmung aufweist.

Besonders vorteilhafterweise ist die Abrollfläche des Ausgleichselements entlang der Schwenkebene zumindest bereichsweise mit einem nicht konstanten Krümmungsradius gekrümmt. In anderen Worten weist die Schnittkurve bzw. -linie zwischen Schwenkebene und Abrollfläche des Ausgleichselements einen Krümmungsradius auf, der zumindest bereichsweise verschieden bzw. unterschiedlich bzw. nicht konstant ausgebildet ist. Somit ist der Krümmungsradius der Abrollfläche des Ausgleichselements innerhalb einer bestimmten Schwenkebene entlang der Abrollfläche variabel bzw. veränderlich bzw. nicht konstant ausgebildet. Hierdurch wird gewährleistet, dass bei einem Abrollen bzw. Verlagern des Ausgleichselements in Bezug auf das Fußelement der Abstand zwischen Schwenkachse und Fußelement (insbesondere dessen Abrollbereich) veränderlich ist bzw. sich verändert. Dies hat zur Folge, dass bei einem Positionsversatz des Fahrzeugs sich die absolute Länge des Stützfußes verändert und somit die Höhe des Kupplungs- bzw. Verbindungsbereichs des Fahrzeugs in Abhängigkeit von der Höhenänderung des Federsystems (hier insbesondere Luftfeder) konstant, zumindest jedoch nahezu konstant, gehalten werden kann. Dies ist besonders wichtig, da bei den aus dem Stand der Technik bekannten Systemen bei sich absenkendem Fahrzeughinterteil und konstanter Stützfußhöhe der Abstand des Fahrzeugvorderteils vom Boden und somit auch der des Verbindungsbereichs zum Zugfahrzeug (beispielsweise der Sattelkupplungszapfen) zunimmt. Sollte dann das Fahrzeug von einer Zugmaschine mit derselben Kupplungshöhe wie sie beim Entkuppeln eingestellt war wieder aufgenommen werden, besteht die Gefahr, dass die Kupplungselemente beim Verbinden der Fahrzeuge beschädigt werden. Insbesondere besteht die Möglichkeit, dass der Sattelkupplungszapfen des Fahrzeugs gegenüber dem Sattelkupplungsschloss des Zugfahrzeugs zu hoch ist und der untere Rand des Sattelkupplungszapfens den Haken des Sattelkupplungsschlosses beim Einfahren zerstört. Um dies zu verhindern ist es besonders vorteilhaft, wenn die Abrollfläche des Ausgleichselements entlang der Schwenkebene in zumindest einem Randbereich der Abrollfläche einen kleineren Abstand zur Schwenkachse aufweist als in deren Mittelbereich. Der Randbereich der Abrollfläche des Ausgleichselements muss hierbei jedoch nicht unbedingt der äußerste Rand sein, sondern kann auch den Mittelbereich der Abrollfläche des Ausgleichselements direkt benachbart angeordnet sein und somit vom absoluten Rand der Abrollfläche beabstandet sein. Bei einem Positionsversatz des Fahrzeugs verringert sich durch Bewegung des Stützfußes in Richtung der zweiten Position die Höhe desselben bei einem Abrollen des Ausgleichselements vom Mittelbereich zum Randbereich, sodass bei einem sich absenkenden Luftfederaggregat die Höhe des Kupplungsbereichs des Fahrzeugs vorteilhafterweise konstant gehalten werden kann. Besonders vorteilhafterweise weist die Abrollfläche des Ausgleichselements entlang der Schwenkebene einen von zumindest einem Randbereich der Abrollfläche zu deren Mittelbereich kleiner werdenden Krümmungsradius auf. Besonders zweckmäßigerweise kann die Abrollfläche des Ausgleichselements entlang der Schwenkebene einen von zwei im Wesentlichen gegenüberliegenden Randbereichen der Abrollfläche zu deren Mittelbereich kleiner werdenden Krümmungsradius aufweisen. Der Mittelbereich liegt hierbei im Wesentlichen zwischen den beiden Randbereichen. Der Mittelbereich der Abrollfläche des Ausgleichselements ist vorzugsweise insbesondere derjenige Bereich, welcher in der ersten bzw. Ursprungsposition des Ausgleichselements auf dem Abrollbereich des Fußelements aufliegt. Entsprechend sind die Randbereiche der Abrollfläche von dem Mittelbereich in Umfangsrichtung benachbart oder beabstandet, wobei diese nicht zwingendermaßen den äußeren Rand der Abrollfläche bilden müssen. Bei einer Idealisierung der Abrollkurve (Schnittkurve der Abrollfläche mit der Schwenkebene) als Bogenabschnitt sind die Randbereiche die jeweiligen Endbereiche des Bogens. Der Krümmungsradius der Schnittkurve der Abrollfläche mit der Schwenkebene nimmt somit ausgehend von den Randbereichen zum Mittelbereich hin ab. In anderen Worten ist der Krümmungsradius der Abrollfläche in dessen Mittelbereich kleiner als in daneben liegenden Bereichen. Ferner in anderen Worten ist der (radiale) Abstand zwischen Schwenkachse und Abrollfläche in den Randbereichen kleiner als im Mittelbereich. Dies führt dazu, dass bei einer Verlagerung des Ausgleichselements von der ersten Position in Richtung der zweiten Position sich die Schwenkachse des Ausgleichselements dem Auflagebereich (in vertikaler Richtung) annähert. Hierdurch ist es möglich, die horizontale Winkelstellung des Fahrzeugs auch in dessen abgestellten bzw. abgekuppelten Zustand im Wesentlichen konstant zu halten, selbst wenn sich das Fahrzeugheck aufgrund einer Leckage im Bremssystem oder Luftfedersystem absenkt.

In einer bevorzugten Ausführungsform weist der Stützfuß eine Vorspanneinrichtung auf, um das Ausgleichselement in Bezug auf das Fußelement in die erste Position vorzuspannen. Hierdurch wird gewährleistet, dass beim Beabstanden des Stützelements vom Boden (d. h. beim Einfahren des Stützelements) das Ausgleichselement durch die Vorspanneinrichtung in Richtung der Grundstellung bzw. ersten Position bzw. Ursprungsposition gebracht werden kann.

Zweckmäßigerweise ist Vorspanneinrichtung aus zumindest einer Feder ausgebildet, welche zwischen dem Fußelement und dem Ausgleichselement verspannt ist. Die Feder ist insbesondere an dem Auflagebereich des Fußelements angeordnet bzw. fixiert bzw. befestigt. Es versteht sich, dass ebenfalls eine Vielzahl von Federn vorgesehen sein kann. So können beispielsweise zwei Federn vorgesehen sein, welche - in Längsrichtung bzw. Längserstreckung des Auflagebereichs gesehen - jeweils vorne und hinten am Auflagebereich angeordnet bzw. fixiert sind und entsprechend vorne und hinten bzw. an den Randbereichen des Ausgleichselements befestigt sind. Die Federn sind zweckmäßigerweise als Schraubenfedern ausgeführt und lösbar am Fußelement und Ausgleichselement angeordnet, um einen einfachen Austausch zu gewährleisten. Bei einer Verschwenkung des Ausgleichselements können die Federn in einem Rücksprung des Ausgleichselements zumindest teilweise aufgenommen werden. Alternativ zum Rücksprung kann ebenfalls auch eine Öffnung bzw. ein Durchbruch vorgesehen sein. Diese sind besonders vorteilhafterweise im Bereich oder vorzugsweise mittig zu einer im Wesentlichen parallel zur Schwenkebene angeordneten Mittelebene, die entlang der Schwenkachse des Ausgleichselements im Wesentlichen mittig angeordnet ist, ausgebildet. Hierbei kann sich der Rücksprung bzw. die Öffnung bzw. Durchbrechung im Wesentlichen umfänglich zumindest über einen Teil der Abrollfläche erstrecken. Es versteht sich, dass sich der Rücksprung, die Aussparung oder Durchbrechung auch über den gesamten Umfang der Abrollfläche erstrecken kann, sodass im Wesentlichen zwei getrennte Abrollflächen vorgesehen sind. Bei der Ausbildung eines Ausgleichselements mit einem Rücksprung ist die Tiefe desselben im Wesentlichen dem Außendurchmesser einer als Vorspanneinrichtung vorgesehenen Schraubenfeder entsprechend ausgebildet. Entsprechend ist es darüber hinaus vorteilhaft, wenn die Querschnittskonfiguration des Rücksprungs im Wesentlichen der äußeren Querschnittskonfiguration der als Feder vorgesehenen Vorspanneinrichtung entspricht.

Weitere Vorteile und Merkmale der vorliegenden Erfindung ergeben sich aus der nachfolgenden Beschreibung von bevorzugten Ausführungsformen mit Bezug auf die beigefügten Figuren, wobei einzelne Merkmale der Ausführungsformen zu neuen Ausführungsformen kombiniert werden können. Es zeigen:
Figur 1 eine perspektivische Ansicht einer bevorzugten Ausführungsform des erfindungsgemäßen Stützfußes in der ersten Position.
Figuren 2a und 2b eine Seitenansicht und eine Frontalansicht einer bevorzugten Ausführungsform des erfindungsgemäßen Stützfußes in der ersten Position.
Figur 3 eine Seitenansicht einer bevorzugten Ausführungsform des erfindungsgemäßen Stützfußes in der zweiten Position.
Figur 4 eine Seitenansicht einer bevorzugten Ausführungsform des erfindungsgemäßen Ausgleichselements.

Die im Folgenden beschriebenen beispielhaften bevorzugten Ausführungsformen des erfindungsgemäßen Stützfußes stellen lediglich eine beispielhafte Beschreibung des Gegenstands der Erfindung dar, der nicht limitierend auf die dargestellten Merkmale beschränkt werden darf, wobei gleiche Elemente einzelner Ausführungsformen mit den gleichen Bezugszeichen versehen sind.

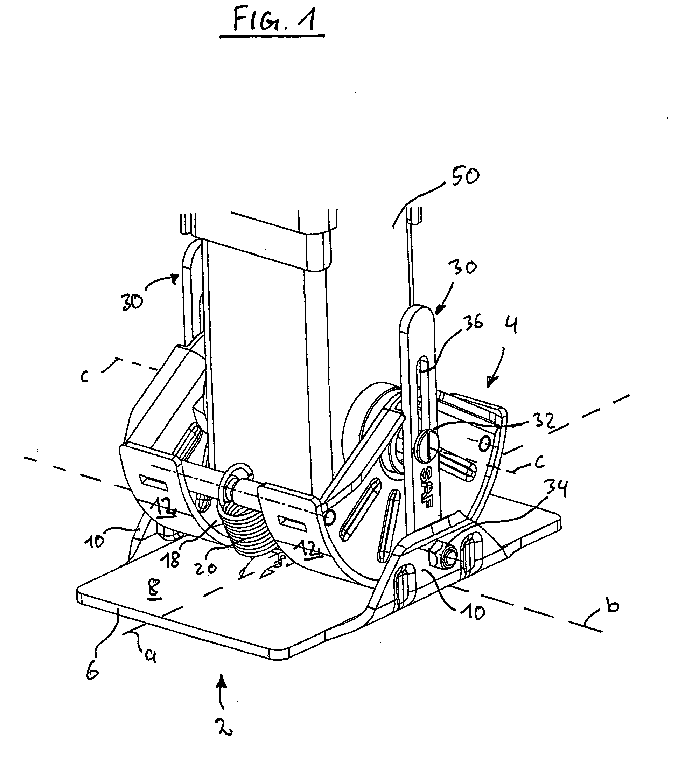

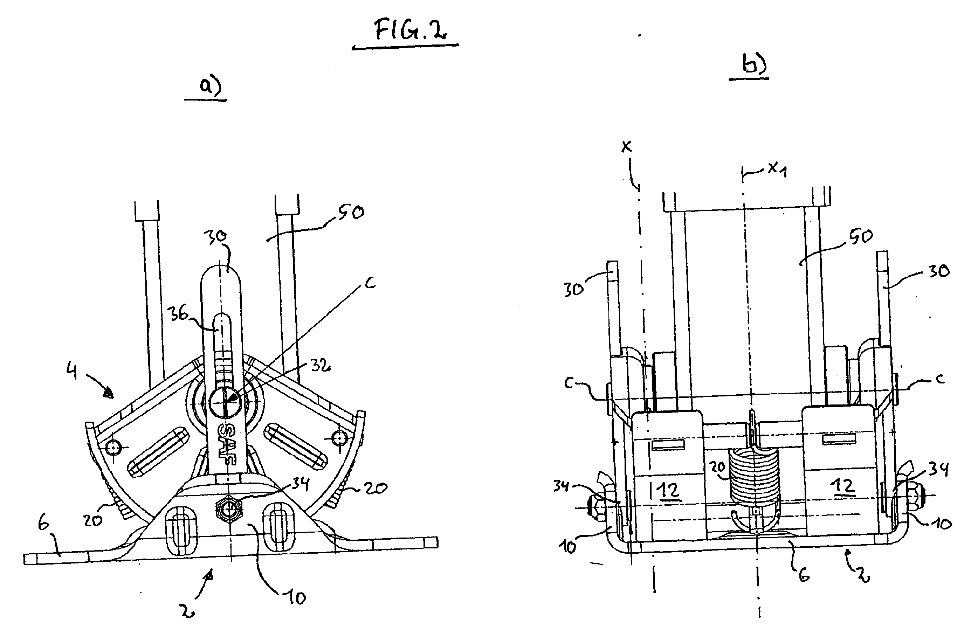

In den Figuren 1 und 2 ist eine perspektivische Ansicht, eine Seitenansicht und eine Frontalansicht einer beispielhaften, bevorzugten Ausführungsform des erfindungsgemäßen Stützfußes in dessen erster Position dargestellt. Der Stützfuß weist ein Fußelement 2 sowie ein Ausgleichselement 4 auf. An dem Ausgleichselement 4 ist schwenk- bzw. rotier- bzw. drehbar ein Stützelement 50 angeordnet, welches beispielsweise als Teleskop-Stützrohr ausgebildet sein kann und mit dem Rahmen des Fahrzeugs an dessen gegenüberliegender Seite verbunden ist.

Das Fußelement 2 ist als im Wesentlichen rechteckförmige Platte ausgebildet und weist einen Auflagebereich 6 auf, welcher auf dem Untergrund bzw. Boden aufliegt. An dem Auflagebereich 6 (insbesondere an dessen dem Boden abgewandter Seite) ist ein Abrollbereich 8 vorgesehen, auf welchem das Ausgleichselement 4 abrollbar ist. Darüber hinaus weist das Fußelement 2 an dessen Längskante jeweils einen Führungsbereich 10, der als sich nicht über die gesamte Längskante, sondern lediglich über einen sehr kurzen Bereich derselben erstreckender Vorsprung ausgebildet ist. Das Fußelement 2 weist eine im Wesentlichen rechteckförmige Grundfläche auf, die durch den Auflagebereich 6 konstituiert bzw. aufgespannt wird. Entsprechend weist das Fußelement 2 bzw. dessen Auflagebereich 6 eine Längsachse a sowie eine Querachse b auf, wobei die Querachse b im Wesentlichen senkrecht zur Längsachse a steht. Die Längsachse a liegt hierbei im Wesentlichen parallel zu einer Ebene (Schwenkebene), in welcher das Ausgleichselement 4 schwenken kann.

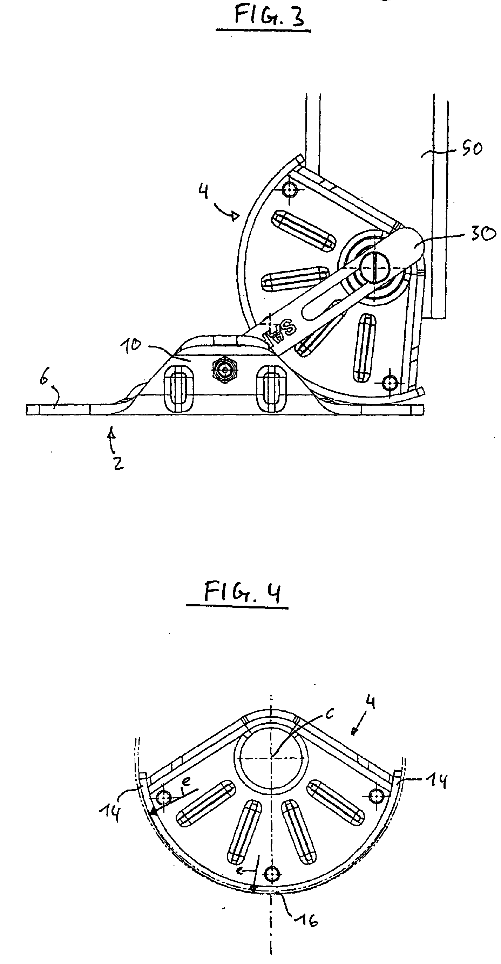

Das Ausgleichselement 4 weist vorteilhafterweise eine Lagereinrichtung bzw. einen Lagerbereich auf, über welchen das Ausgleichselement 4 mit dem Stützelement 50 derart verbunden ist, dass das Ausgleichselement 4 in Relation zum Stützelement 50 über eine Schwenkachse c dreh- bzw. schwenkbar ist. Darüber hinaus weist das Ausgleichselement 4 in der dargestellten Ausführungsform zwei Abrollflächen 12 auf, die derart mit dem Abrollbereich 8 des Fußelements 2 zusammenwirken, dass das Ausgleichselement 4 auf dem Fußelement 2 entlang der Längsachse a abrollbar ist. Infolgedessen ist das Ausgleichselement 4 in Bezug auf das Fußelement 2 zwischen einer Ursprungsposition bzw. ersten Position (Figur 1 bzw. 2) und einer ausgelenkten Position bzw. zweiten Position (Figur 3) verlagerbar, indem das Ausgleichselement 4 über die Schwenkachse c schwenkbar gelagert ist und auf dem Abrollbereich 8 des Fußelements 2 abrollt.

Zwischen den Abrollflächen 12 des Ausgleichselements 4 ist eine Aussparung bzw. Öffnung 18 vorgesehen, die ebenfalls als Rücksprung ausgebildet sein kann. Die Aussparung 18 kann sich insbesondere entlang einer Mittelebene x1 erstrecken und dient vorteilhafterweise der Aufnahme einer aus zwei Federn 20 ausgebildeten Vorspanneinrichtung, die ausgelegt ist, das Ausgleichselement 4 in Bezug auf das Fußelement 2 in die erste Position vorzuspannen. Die Federn 20 sind hierbei als Schraubenfedern ausgebildet, wobei deren erstes Ende lösbar mit dem Auflagebereich 6 des Fußelements 2 und deren zweites Ende lösbar mit einem Montagemittel (hier Bolzen) vorzugsweise an den Randbereichen des Ausgleichselements 4 befestigt ist.

Weiterhin vorgesehen ist eine Führungseinrichtung mit zwei im Wesentlichen gegenüberliegenden Führungselementen 30. Die Führungselemente 30 sind dreh- bzw. schwenk- bzw. kippbar einerseits an dem Ausgleichselement 4 und andererseits an dem Fußelement 2 angeordnet. Wie ersichtlich, ist das Führungselement 30 im Wesentlichen als Hebelelement ausgebildet, dessen Erstreckung in Breitenrichtung ein Vielfaches kleiner als in Längsrichtung ist. Das Führungselement 30 ist über einen ersten Lagerbereich 32 an dem Ausgleichselement 4 angeordnet. Über einen zweiten Lagerbereich 34 ist das Führungselement 30 an dem Fußelement 2 schwenkbar angeordnet. Um eine translatorische Verschiebbarkeit zwischen Führungselement 30 und Ausgleichselement 4 zu ermöglichen, weist das Führungselement 30 als ersten Lagerbereich 32 ein Langloch 36 auf. Wie ersichtlich, fluchtet bzw. entspricht die Schwenkachse zwischen dem Ausgleichselement 4 und dem Führungselement 30 (mit) der Schwenkachse c des Ausgleichselements 4.

Die Abrollfläche 12 des Ausgleichselements 4 ist entlang einer Schwenkebene x gekrümmt ausgebildet. Die Schwenkebene x ist hierbei im Wesentlichen senkrecht zur Schwenkachse c angeordnet. Entsprechend ist die Schnittlinie der Abrollfläche 12 des Ausgleichselements 4 mit der Schwenkebene x gekrümmt ausgebildet. Die Krümmung ist hierbei insbesondere vorteilhafterweise rund.

In Figur 4 ist eine besonders bevorzugte Ausführungsform des erfindungsgemäßen Ausgleichselements 4 dargestellt. Die Abrollfläche 12 des Ausgleichselements 4 weist hierbei entlang der Schwenkebene x einen Krümmungsradius e auf, der in radialer Richtung bzw. Umfangsrichtung nicht konstant ist. In anderen Worten ist der Krümmungsradius e insbesondere derart, dass dieser von den Randbereichen 14 zu dem Mittelbereich 16 der Abrollfläche 12 abnimmt. Infolgedessen weist die Abrollfläche 12 des Ausgleichselements 4 entlang einer Schwenkebene x in zumindest einem der Randbereiche 14 einen kleineren Abstand zur Schwenkachse c auf als in deren Mittelbereich 16.

### Bezugszeichenliste

- 2: Fußelement
- 4: Ausgleichselement
- 6: Auflagebereich
- 8: Abrollbereich
- 10: Führungsbereich
- 12: Abrollfläche
- 14: Randbereich
- 16: Mittelbereich
- 18: Aussparung
- 20: Feder
- 30: Führungselement
- 32: erster Lagerbereich
- 34: zweiter Lagerbereich
- 50: Stützelement
- a: Längsachse
- b: Querachse
- c: Schwenkachse
- e: Krümmungsradius
- x: Schwenkebene bzw. Mittelebene

## Patentansprüche

1. Stützfuß für eine Teleskop-Stützvorrichtung von Fahrzeugen, wie Sattelanhängern, umfassend
ein Fußelement (2) mit einem Auflagebereich (6) zur Auflage auf einem Untergrund,
ein Ausgleichselement (4) zur Aufnahme eines Stützelements (50) und zum Ausgleich eines Positionsversatzes desselben, indem das Ausgleichselement (4) in Bezug auf das Fußelement (2) zwischen einer ersten und einer zweiten Position verlagerbar ist, wobei das Ausgleichselement (4) schwenkbar gelagert ist, und
eine Führungseinrichtung mit zumindest einem Führungselement (30), um eine Führung zwischen Ausgleichselement (4) und Fußelement (2) bereitzustellen, wobei das Führungselement (30) schwenkbar einerseits an dem Ausgleichselement (4) und andererseits an dem Fußelement (2) angeordnet ist.

2. Stützfuß nach Anspruch 1, wobei das Führungselement (30) in einer Ebene im Wesentlichen parallel zur Schwenkebene (x) des Ausgleichselements (4) schwenkbar ist.

3. Stützfuß nach einem der vorhergehenden Ansprüche, wobei das Führungselement (30) als Hebelelement ausgebildet ist.

4. Stützfuß nach einem der vorhergehenden Ansprüche, wobei das Führungselement (30) an dem Ausgleichselement (4) über einen ersten Lagerbereich (32) und an dem Fußelement (2) über einen zweiten Lagerbereich (34) schwenkbar angeordnet ist.

5. Stützfuß nach Anspruch 4, wobei das Führungselement über den ersten Lagerbereich (32) weiterhin translatorisch verschiebbar an dem Ausgleichselement (4) angeordnet ist.

6. Stützfuß nach Anspruch 5, wobei der erste Lagerbereich (32) als Langloch ausgebildet ist.

7. Stützfuß nach einem der vorhergehenden Ansprüche, wobei zwei Führungselemente (30) vorgesehen sind, welche an im Wesentlichen gegenüberliegenden Seiten des Ausgleichselements (4) angeordnet sind.

8. Stützfuß nach einem der vorhergehenden Ansprüche, wobei die Schwenkachse zwischen Ausgleichselement (4) und Führungselement (30) mit der Schwenkachse (c) des Ausgleichselements (4) fluchtet.

9. Stützfuß nach einem der vorhergehenden Ansprüche, wobei die Führungseinrichtung einen Führungsbereich (10) aufweist, der als sich vom Auflagebereich (6) im Wesentlichen senkrecht erstreckender Wandbereich ausgebildet ist.

10. Stützfuß nach Anspruch 9, wobei das Führungselement (30) schwenkbar an dem Führungsbereich (10) angeordnet ist.

11. Stützfuß nach einem der vorhergehenden Ansprüche, wobei das Ausgleichselement (4) auf einem Abrollbereich (8) des Fußelements (2) abrollbar ist.

12. Stützfuß nach Anspruch 11, wobei die Abrollfläche (12) des Ausgleichselements (4) entlang einer Schwenkebene (x) zumindest bereichsweise mit einem nicht konstanten Krümmungsradius (e) gekrümmt ist.

13. Stützfuß nach einem der vorhergehenden Ansprüche, weiterhin aufweisend eine Vorspanneinrichtung, um das Ausgleichselement (4) in Bezug auf das Fußelement (2) in die erste Position vorzuspannen.

14. Stützfuß nach Anspruch 13, wobei die Vorspanneinrichtung aus zumindest einer Feder (20) ausgebildet ist, welche zwischen dem Fußelement (2) und dem Ausgleichselement (4) verspannt ist.

## Claims

1. Support foot for a telescopic support device of vehicles, such as semi-trailers, comprising
a foot element (2) with a resting portion (6) for resting on an underground,
a compensating element (4) for receiving a support element (50) and for compensating a positional offset of the same by the compensating element (4) being movable relative to the foot element (2) between a first and a second position, wherein the compensating element (4) is swivel-supported, and
a guiding device with at least one guiding element (30) in order to provide for a guiding between the compensating element (4) and the foot element (2), wherein the guiding element (30) is swivel-mounted, on the one hand, on the compensating element (4) and, on the other hand, on the foot element (2).

2. Support foot according to claim 1, wherein the guiding element (30) can be swivelled in a plane essentially parallel to the swivel plane (x) of the compensating element (4).

3. Support foot according to any one of the preceding claims, wherein the guiding element (30) is designed as a lever element.

4. Support foot according to any one of the preceding claims, wherein the guiding element (30) is swivel-mounted on the compensating element (4) via a first bearing portion (32) and swivel-mounted on the foot element (2) via a second bearing portion (34).

5. Support foot according to claim 4, wherein the guiding element, via the first bearing portion (32), is mounted on the compensating element (4) furthermore translatorily movably.

6. Support foot according to claim 5, wherein the first bearing portion (32) is designed as an elongated hole.

7. Support foot according to any one of the preceding claims, wherein two guiding elements (30) are provided which are mounted on essentially mutually opposite sides of the compensating element (4).

8. Support foot according to any one of the preceding claims, wherein the swivel axis is aligned with the swivel axis (c) of the compensating element (4) between the compensating element (4) and the guiding element (30).

9. Support foot according to any one of the preceding claims, wherein the guiding device comprises a guiding portion (10) which is designed as a wall portion extending essentially perpendicularly from the resting portion (6).

10. Support foot according to claim 9, wherein the guiding element (30) is swivel-mounted on the guiding portion (10).

11. Support foot according to any one of the preceding claims, wherein the compensating element (4) can be rolled along on a rolling portion (8) of the foot element (2).

12. Support foot according to claim 11, wherein the rolling surface (12) of the compensating element (4) is curved along a swivel plane (x) at least in certain regions by a non-constant radius of curvature (e).

13. Support foot according to any one of the preceding claims, further comprising a pre-tensioning device in order to pre-tension the compensating element (4) into the first position relative to the foot element (2).

14. Support foot according to claim 13, wherein the pre-tensioning device is designed of at least a spring (20) which is braced between the foot element (2) and the compensating element (4).

## Revendications

1. Pied de soutien pour un dispositif de soutien télescopique de véhicules, comme des remorques de semi-remorques, comprenant
un élément de pied (2) avec une zone d'appui (6) pour l'appui sur un sous-sol, un élément de compensation (4) pour recevoir un élément de soutien (50) et pour compenser un décalage de position de celui-ci, en ce que l'élément de compensation (4) est déplaçable par rapport à l'élément de pied (2) entre une première et une seconde position, l'élément de compensation étant monté pivotant, et
un moyen de guidage avec au moins un élément de guidage (30) pour assurer un guidage entre l'élément de compensation (4) et l'élément de pied (2), ledit élément de guidage (30) étant agencé en pivotement d'une part sur l'élément de compensation (4) et d'autre part sur l'élément de pied (2).

2. Pied de soutien selon la revendication 1, dans lequel l'élément de guidage (30) est capable de pivoter dans un plan sensiblement parallèle au plan de pivotement (x) de l'élément de compensation (4).

3. Pied de soutien selon l'une des revendications précédentes, dans lequel l'élément de guidage (30) est réalisé sous forme d'élément à levier.

4. Pied de soutien selon l'une des revendications précédentes, dans lequel l'élément de guidage (30) est agencé en pivotement sur l'élément de compensation (4) via une première zone de montage (32), et sur l'élément de pied (2) via une seconde zone de montage (34).

5. Pied de soutien selon la revendication 4, dans lequel l'élément de guidage est agencé sur l'élément de compensation (4) en outre avec possibilité de déplacement en translation via la première zone de montage (32).

6. Pied de soutien selon la revendication 5, dans lequel la première zone de montage (32) est réalisée sous forme de trou oblong.

7. Pied de soutien selon l'une des revendications précédentes, dans lequel deux éléments de guidage (30) sont prévus, lesquels sont agencés sur des côtés sensiblement opposés de l'élément de compensation (4).

8. Pied de soutien selon l'une des revendications précédentes, dans lequel l'axe de pivotement entre l'élément de compensation (4) et l'élément de guidage (30) est en alignement avec l'axe de pivotement (c) de l'élément de compensation (4).

9. Pied de soutien selon l'une des revendications précédentes, dans lequel le moyen de guidage comprend une zone de guidage (10) qui est réalisée comme une zone de paroi qui s'étend sensiblement perpendiculairement depuis la zone d'appui (6).

10. Pied de soutien selon la revendication 9, dans lequel l'élément de guidage (30) est agencé en pivotement sur la zone de guidage (10).

11. Pied de soutien selon l'une des revendications précédentes, dans lequel l'élément de compensation (4) est capable de rouler sur une zone de roulement (8) de l'élément de pied (2).

12. Pied de soutien selon la revendication 11, dans lequel la surface de roulement (12) de l'élément de compensation (4) est incurvée le long d'un plan de pivotement (x) au moins localement avec un rayon de courbure (e) non constant.

13. Pied de soutien selon l'une des revendications précédentes, comprenant en outre un moyen de précontrainte, afin de précontraindre l'élément de compensation (4) dans la première position par référence à l'élément de pied (2).

14. Pied de soutien selon la revendication 13, dans lequel le moyen de précontrainte est réalisé par au moins un ressort (20) qui est bandé entre l'élément de pied (2) et l'élément de compensation (4).
